# EUROPÄISCHE PATENTSCHRIFT

(11) **EP 2 265 663 B1**
(45) Veröffentlichungstag und Bekanntmachung des Hinweises auf die Patenterteilung: **12.10.2011**
(21) Anmeldenummer: 09718827.0
(22) Anmeldetag: 26.02.2009
(51) Int. Cl.: C08J 3/07, C08J 3/12, C08L 83/04, C08L 83/06, C08L 83/08, C09D 5/03, C09D 5/18, C09D 7/12, C09J 11/08, C08L 31/04, C08L 33/02, C08L 33/12

(54) **VERFAHREN ZUR HERSTELLUNG VON KOMPOSITPARTIKELN**
METHOD FOR PRODUCING COMPOSITE PARTICLES
PROCÉDÉ DE PRODUCTION DE PARTICULES COMPOSITES

(30) Priorität: 10.03.2008 DE 102008000584
(43) Veröffentlichungstag der Anmeldung: 29.12.2010
(73) Patentinhaber: Wacker Chemie AG, 81737 München (DE)
(72) Erfinder: HASHEMZADEH, Abdulmajid, 84508 Burgkirchen (DE)
(74) Vertreter: Schuderer, Michael
(86) Internationale Anmeldenummer: PCT/EP2009/052249
(87) Internationale Veröffentlichungsnummer: WO 2009/112370

(56) Entgegenhaltungen:
- EP-A- 0 528 038
- WO-A-2004/003081
- WO-A-2009/021929
- JP-A- 3 281 679
- US-A- 4 997 859
- US-A- 5 868 966
- US-A1- 2003 099 844
- CAMPOS G. ET AL.: "Development of New Carpet Backings Based on Composite Polymer Particles" J. OF REINFORCED PLASTICS AND COMPOSITES, Bd. 25, Nr. 18, 2006, Seiten 1897-1901, XP002527509

## Beschreibung

Gegenstand der vorliegenden Erfindung sind Verfahren zur Herstellung von Kompositpartikeln auf Basis von löslichen organischen Polymeren und Siliciumverbindungen, die nach den Verfahren erhältlichen Produkte sowie deren Verwendung beispielsweise als Additiv, Bindemittel oder Cobindemittel für unterschiedliche Anwendungen.

Kompositpartikel enthalten organische und anorganische Domänen, wie beispielsweise eine organische Polymermatrix und daran fixierte anorganische Partikel, und haben üblicherweise Durchmesser von 4 bis 5000 nm.

In gängigen Verfahren zur Herstellung von Kompositpartikeln werden organische Monomere mittels Emulsionspolymerisation in wässrigen Dispersionen von anorganischen Partikeln polymerisiert, wobei organische Domänen auf der Oberfläche der anorganischen Partikel verankert werden, wie beispielsweise beschrieben in Dong-Ming Qi, J. of Applied Polym. Sci., 2006, Vol. 99, Seiten 3425 bis 3432; Tsutomu Mizutani, J. of Applied Polym. Sci., 2006, Vol. 99, Seiten 659 bis 669; Frank Bauer, Macromol. Mater. Eng., 2006291, Seiten 493 bis 498 oder aus der DE-A 10 2004 010 155, US 3,544,500, US 4,421,660 oder der WO-A 2006/072464.

Die Fixierung der organischen und der anorganischen Domänen der Kompositpartikel sowie die Bereitstellung stabiler Kompositpartikel bereiten allerdings Probleme. Denn die anorganischen Partikel oder deren Ausgangsstoffe und die organischen Monomere bzw. die organischen Polymermatrices haben für gewöhnlich unterschiedliche Polaritäten und neigen dazu, sich voneinander zu separieren bzw. sich jeweils untereinander zu agglomerieren.

Tritt eine derartige Agglomeration vor oder während der Herstellung der Kompositpartikel auf, so werden beispielsweise die agglomerierten anorganischen Partikel im Zuge der Polymerisation der organischen Monomere von der organischen Polymermatrix eingekapselt, so dass keine gleichmäßige Fixierung anorganischer Partikel auf der organischen Polymermatrix stattfindet und somit letztlich keine chemisch einheitlich aus organischen und anorganischen Domänen aufgebauten Kompositpartikel entstehen. Entsprechende Mischungen liegen in Lösungsmitteln nicht als kolloidale Primärteilchen vor. Es kann sogar vorkommen, dass die anorganischen Partikel und die organische Polymermatrix als Abmischung nebeneinander vorliegen.

Aber auch in Kompositpartikeln, die einheitlich aus anorganischen und organischen Domänen aufgebaut sind, kann es zu einer Agglomeration der anorganischen bzw. organischen Domänen kommen, was zu einer unzureichenden Lagerstabilität insbesondere von gelösten, emulgierten oder dispergierten Kompositpartikeln führt und sich durch Gelierung oder Stippenbildung äußert. Insbesondere bei höheren Temperaturen, beispielsweise ab 40°C, tritt eine derartige Agglomeration auf. Ebenso neigen wässrige Dispersionen von ausschließlich aus anorganischen Bausteinen aufgebaute Partikeln, wie beispielsweise kolloides Silica oder Organopolysiloxane, bei höheren Temperaturen, beispielsweise bei 70°C, oder sogar schon bei Raumtemperatur zur Agglomeration.

Agglomerierte Kompositpartikel haben nicht mehr die gewünschten anwendungstechnischen Eigenschaften oder sind sogar gänzlich unbrauchbar. Um beispielsweise stabile wässrige Dispersionen von Kompositpartikeln bereitzustellen, werden üblicherweise Emulgatoren, Schutzkolloide oder spezielle Additive als Stabilisatoren zugesetzt, wie beispielsweise die in der DE-A 10 2004 010 155 empfohlenen hydroxygruppenhaltigen Alkylamino-Verbindungen.

Aufgabe der vorliegenden Erfindung war es, Verfahren zur Herstellung von Kompositpartikeln bereitzustellen, mit denen die oben genannten Nachteile vermieden werden, und mit denen insbesondere Kompositpartikel zugänglich werden, die auch in Form von Dispersionen lagerstabil sind, idealerweise auch ohne Einsatz von Stabilisatoren.

Die Aufgabe wurde überraschenderweise mit Verfahren gelöst, in denen hydrolisierbare oder OH-Gruppen enthaltende Siliciumverbindungen in Gegenwart von löslichen Polymeren kondensiert wurden, wobei anorganische Partikel auf den löslichen Polymeren fixiert wurden.

Bekannt sind Kompositpartikel, die durch radikalisch initiierte Copolymerisation ethylenisch ungesättigter, organischer Monomere und ethylenisch ungesättigter, anorganischer Partikel, wie beispielsweise die in der EP-A 1620271 vorgeschlagenen ethylenisch ungesättigten Siloxane, erhalten werden.

Die WO-A 2007/057382 beschreibt Silan-modifizierte Polyvinylalkohole, die durch radikalisch initiierte Polymerisation von ethylenisch ungesättigten, silanhaltigen Monomeren in Gegenwart von Polyvinylalkoholen erhalten werden.

Aus der DE-A 102007038333 sind Zusammensetzungen bekannt, die durch Kondensation von Siliciumverbindungen in Gegenwart von Polyvinylalkoholen hergestellt wurden, wobei die dabei entstandenen anorganischen Partikel allerdings nicht auf Polyvinylalkoholen fixiert wurden, sondern neben diesen in der Zusammensetzung als Abmischung vorlagen.

Die EP-A 1243619 offenbart Kompositmaterialien bestehend aus organischen Domänen, wie Polyacrylsäure, und anorganischen Domänen, beispielsweise Natriumsilikate oder kolloidale Kieselsäure, wobei die organischen und anorganischen Domänen durch ionische Wechselwirkungen mit zweiwertigen Metallkationen verknüpft sind, so dass die Kompositmaterialien als Aggregate der polymeren Domänen in Form von Gelen vorliegen.

Gegenstand der Erfindung sind Verfahren zur Herstellung von Kompositpartikeln, dadurch gekennzeichnet, dass α) ein oder mehrere Siliciumverbindungen der allgemeinen Formel

(RO)ₙSiR¹₄₋ₙ (1),

worin
R einen gegebenenfalls substituierten Alkyl- oder Arylrest mit 1 bis 20 Kohlenstoffatomen oder ein Wasserstoffatom,
R¹ einen gegebenenfalls substituierten Kohlenwasserstoffrest oder ein Wasserstoffatom bedeutet, und
n einen Wert von 1 bis 4 annimmt, oder
β) ein oder mehrere Kondensationsprodukte der Siliciumverbindungen der Formel (1)
in einem Lösungsmittel oder einem Gemisch von mehreren Lösungsmitteln
in Gegenwart von einem oder mehreren löslichen Polymeren kondensiert werden,
wobei als löslichen Polymere Polymerisate von Vinylestern mit 6 bis 15 Gew.-% von ethylenisch ungesättigten Carbonsäuren und gegebenenfalls 0,3 bis 2 Gew.-% von ethylenisch ungesättigten Silanen; Polymerisate von Vinylestern mit 0,3 bis 2 Gew.-% von ethylenisch ungesättigten Silanen; Polymerisate von (Meth)acrylsäureestern mit 6 bis 15 Gew.-% von ethylenisch ungesättigten Carbonsäuren und gegebenenfalls 0,3 bis 2 Gew.-% von ethylenisch ungesättigten Silanen; oder Polymerisate von (Meth)acrylsäureestern mit 0,3 bis 2 Gew.-% von ethylenisch ungesättigten Silanen eingesetzt werden,
wobei sich die Angaben in Gew.-% auf jeweils 100 Gew.-% aufaddieren,
wobei die löslichen Polymere im vorgenannten Lösungsmittel oder im vorgenannten Gemisch von mehreren Lösungsmitteln bei einer beliebigen Temperatur innerhalb des Temperaturbereichs von 1 bis 100°C und bei einem beliebigen pH-Wert zwischen 2 und 12 zu mindestens 1 g pro Liter Lösungsmittel oder Lösungsmittelgemisch löslich sind, und
wobei dabei gebildete Kondensationsprodukte der Siliciumverbindungen α) oder Kondensationsprodukte β) oder deren Kondensationsprodukte auf einem oder mehreren löslichen Polymeren fixiert werden.

In den Siliciumverbindungen der Formel (1) sind die Reste R vorzugsweise nicht substituiert. Besonders bevorzugt steht der Rest R der Formel (1) für Methyl, Ethyl oder Propyl, Cyclohexyl, Phenyl, am meisten bevorzugt für Methyl oder Ethyl. Vorzugsweise steht der Rest R¹ für einen Alkyl- oder Arylrest, besonders bevorzugt für Methyl, Ethyl, Propyl, Cyclohexyl, Isooctyl oder Phenyl und am meisten bevorzugt für Methyl oder Ethyl.

Vorzugsweise steht der Rest R¹ auch für eine Gruppe R²X,
in der der Rest R² einen gegebenenfalls substituierten Alkylen-Rest mit 1 bis 20 Kohlenstoffatomen, vorzugsweise mit 1 bis 6 Kohlenstoffatomen bedeutet,
in dem einander nicht benachbarte Methyleneinheiten durch Gruppen -O- ersetzt sein können, und
X über eine kovalente Bindung an den Rest R² gebunden ist und für einen Aminorest NHR³, einen Epoxyrest CR⁴ (O) CR⁵R⁶, einen Urethanrest NR³-C(=O)OR³, einen Harnstoffrest NR³-C(=O)NR³R⁹, ein Phosphorsäurerest P(=O)(OH)₂, ein Anhydridrest C(=O)O(O=)CR³ oder einen Carbonsäurerest steht, wobei
R³ ein Wasserstoffatom oder einen gegebenenfalls substituierten Alkyl-, Aryl- oder Aminoalkyrest mit 1 bis 10 Kohlenstoffatomen bedeutet,
R⁴, R⁵, R⁶ ein Wasserstoffatom oder einen gegebenenfalls substituierten Alkyl- oder Arylrest mit 1 bis 10 Kohlenstoffatomen bedeutet,
wobei die jeweiligen Reste R², R³, R⁴, R⁵ und R⁶ ihre Werte jeweils unabhängig voneinander annehmen, und
wobei die Gruppe R²X über ein Kohlenstoffatom des Restes R² an das Siliciumatom der Formel (1) gebunden ist.

Vorzugsweise sind die Reste R² der Gruppe R²X nicht substituiert. Besonders bevorzugt steht R² für einen Alkylen-Rest mit 1 bis 6 Kohlenstoffatomen, am meisten bevorzugt Methylen, Ethylen oder Propylen.

Vorzugsweise steht R³ für ein Wasserstoffatom, einen Alkyl-, Aryl- oder Aminoalkyrest mit 1 bis 6 Kohlenstoffatomen, besonders bevorzugt Wasserstoffatom, 2-Aminoethyl, Phenyl, Cyclohexyl, Methyl, Ethyl, Propyl oder Butyl.

Die Reste R⁴, R⁵, R⁶ stehen vorzugsweise für ein Wasserstoffatom.

Vorzugsweise nimmt n einen Wert von 2 bis 4, besonders bevorzugt den Wert 3 oder 4 an.

Die einzelnen Reste R, R¹, R², R³, R⁴, R⁵, R⁶ bzw. X und der Wert n der Siliciumverbindungen der Formel (1) weisen ihre Bedeutungen jeweils unabhängig voneinander auf. In allen Ausführungsformen der Formel (1) ist das Siliciumatom jeweils vierwertig.

Beispiele für Silane der Formel (1) sind Tetramethoxysilan, Tetraethoxysilan, Methyltrimethoxysilan, Methyltriethoxysilan, Dimethyldimethoxysilan, Dimethyldiethoxysilan, Isooctyltrimethoxysilan, Isooctyltriethoxysilan, (Cyclohexyl)methyldimethoxysilan, Dicyclopentyldimethoxysilan oder Phenyltriethoxysilan. Bevorzugte Silane der Formel (1) sind Tetramethoxysilan, Tetraethoxysilan, Methyltrimethoxysilan, Methyltriethoxysilan, Isooctyltrimethoxysilan, Isooctyltriethoxysilan oder Phenyltriethoxysilan. Besonders bevorzugt sind Tetramethoxysilan, Tetraethoxysilan, Methyltrimethoxysilan, Methyltriethoxysilan.

Weitere Beispiele für Silane der Formel (1) sind (3-Aminopropyl)triethoxysilan, (3-Aminopropyl)trimethoxysilan, N-(2-Aminoethyl)(3-Aminopropyl)triethoxysilan, N-(2-Aminoethyl)(3-Aminopropyl)trimethoxysilan, N-(2-Aminoethyl)(3-Aminopropyl)methyldimethoxysilan, 3-(Triethoxysilyl)propylbernsteinsäureanhydrid, N-Cyclohexylaminomethylmethyldiethoxysilan, N-(3-(Triethoxysilyl)propyl)-methylurethan, N-(3-(Trimethoxysilyl)propyl)-methylurethan, N-(3-(Triethoxysilyl)propyl)-harnstoff, N-(3-(Trimethoxysilyl)propyl)-harnstoff, (3-Glycidoxypropyl)triethoxysilan, und (3-Glycidoxypropyl)-trimethoxysilan. Bevorzugt sind auch (3-Aminopropyl)-triethoxysilan oder (3-Glycidoxypropyl)triethoxysilan.

Vorzugsweise wird bei der Herstellung der Kompositpartikel mindestens eine Siliciumverbindung der Formel (1) eingesetzt, bei der n einen Wert von 1 bis 3 annimmt, d.h. bei der das Siliciumatom nicht ausschließlich mit Alkoxy-, Aryloxy oder Hydroxygruppen substituiert ist.

Gegebenenfalls können bei der Kondensation zur Herstellung der Kompositpartikel zusätzlich ein oder mehrere ethylenisch ungesättigte Siliciumverbindungen der allgemeinen Formel (2) R⁷SiR⁸₀₋₂(OR⁹)₁₋₃ eingesetzt werden, worin R⁷ die Bedeutung CH₂=CR¹⁰-(CH₂)₀₋₁ oder CH₂=CR¹⁰CO₂(CH₂)₁₋₃ hat, R⁸ die Bedeutung C₁-bis C₃-Alkylrest, C₁- bis C₃-Alkoxyrest oder Halogen, vorzugsweise Cl oder Br hat, R⁹ ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei R⁹ gegebenenfalls durch eine Ethergruppe unterbrochen sein kann, und R¹⁰ für H oder CH₃ steht.

Bevorzugte ethylenisch ungesättigte Siliciumverbindungen der Formel (2) sind γ-Acryl- bzw. γ-Methacryloxypropyltri(alkoxy)-silane, α-Methacryloxymethyltri(alkoxy)silane, γ-Methacryl-oxypropyl-methyldi(alkoxy)silane; Vinylsilane wie Vinylalkyl-di(alkoxy)silane und Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können. Beispiele für bevorzugte ungesättigte Siliciumverbindungen der Formel (2) sind 3-Methacryloxypropyltrimethoxysilan, 3-Methacryloxypropylmethyldimethoxysilan, Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, Methacryloxymethyltrimethoxysilan, 3-Methacryl-oxypropyl-tris(2-methoxyethoxy)silan, Vinyltrichlorsilan, Vinylmethyldichlorsilan, Vinyltris-(2-methoxyethoxy)silan, Trisacetoxyvinylsilan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan, Vinylisobutyldimethoxysilan, Vinyltriisopropyloxysilan, Vinyltributoxysilan, Vinyltrihexyloxysilan, Vinylmethoxydihexoxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykolmodifizierte Vinylsilane.

Als ethylenisch ungesättigte Siliciumverbindungen der Formel (2) werden besonders bevorzugt Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan sowie deren Gemische.

Zusätzlich können bei der Kondensation zur Herstellung der Kompositpartikel ein oder mehrere ethylenisch ungesättigte Siliciumverbindungen der allgemeinen Formel (3) CH₂=CR¹¹-CO-NR¹²-R¹³-SiR¹⁴ₙ(R¹⁵)₃₋ₘ eingesetzt werden, worin n = 0 bis 4, m = 0 bis 2, R¹¹ entweder H oder eine Methyl-Gruppe ist, R¹² H oder eine Alkyl-Gruppe mit 1 bis 5 C-Atomen ist, R¹³ eine AlkylenGruppe mit 1 bis 5 C-Atomen oder eine bivalente organische Gruppe ist, in welcher die Kohlenstoffkette durch ein O- oder N-Atom unterbrochen wird, R¹⁴ eine Alkyl-Gruppe mit 1 bis 5 C-Atomen ist, R¹⁵ eine Alkoxy-Gruppe mit 1 bis 40 C-Atomen ist, welche mit weiteren Heterocyclen substituiert sein können. In Siliciumverbindungen der Formel (3), in denen 2 oder mehrere Gruppen R¹¹ oder R¹⁵ vorkommen, können diese identisch oder unterschiedlich sein.

Beispiele für Siliciumverbindungen der Formel (3) sind: 3-(Meth)acrylamido-propyltrimethoxysilan, 3-(Meth)acrylamidopropyltriethoxysilan, 3-(Meth)acrylamido-propyltri(β-methoxyethoxy)silan, 2-(Meth)acrylamido-2-methylpropyltrimethoxysilan, 2-(Meth)acrylamido-2-methylethyltrimethoxysilan, N-(2-(Meth)acrylamido-ethyl)aminopropyltrimethoxysilan, 3-(Meth)-acrylamido-propyltriacetoxysilan, 2-(Meth)acrylamido-ethyltrimethoxysilan, 1-(Meth)acrylamido-methyltrimethoxysilan, 3-(Meth)acrylamido-propylmethyldimethoxysilan, 3-(Meth)acrylamido-propyldimethylmethoxysilan, 3-(N-Methyl-(Meth)acrylamido)-propyltrimethoxysilan, 3-((Meth)acrylamido-methoxy)-3-hydroxypropyltrimethoxysilan, 3-((Meth)acrylamido-methoxy)-propyltrimethoxysilan, N,N-Dimethyl-N-trimethoxysilylpropyl-3-(Meth)acrylamido-propylammoniumchlorid und N-N-Dimethyl-N-trimethoxysilylpropyl-2-(Meth)acrylamido-2-methylpropylammoniumchlorid.

Bei den im erfindungsgemäßen Verfahren eingesetzten Kondensationsprodukten β) handelt es sich vorzugsweise um Organopolysiloxane, die aus Einheiten der allgemeinen Formel

R¹ₓSi(OR)_{y}O_{(4-x-y)/2} (4)

aufgebaut sind, worin
x 0, 1, 2 oder 3 und y 0, 1 oder 2 ist,
mit der Maßgabe, dass die Summe x+y≤3 ist,
R¹ gleich oder verschieden sein kann und die oben für die Formel (1) angegebenen Bedeutungen annehmen kann, und
R gleich oder verschieden sein kann und die oben für die Formel (1) angegebenen Bedeutungen annehmen kann.

Als Reste R bzw. R¹ sind dieselben Reste bevorzugt, besonders bevorzugt und am meisten bevorzugt, die oben für die Formel (1) entsprechend aufgeführt sind.

Die Partikelgröße der Organopolysiloxane beträgt vorzugsweise von 4 bis 900 nm, besonders bevorzugt 4 bis 40 nm und am meisten bevorzugt 4 bis 30 nm (bestimmt mittels Transelektronenmikroskopie; mit dem Gerät Libra 120 der Firma Zeiss).

Die Siliciumverbindungen α), die Kondensationsprodukte β) sowie die Siliciumverbindungen der Formeln (2) und (3) werden im folgenden auch gemeinsam als Silicium-Komponenten bezeichnet.

Bei der Herstellung der Kompositpartikel beträgt der Anteil der Silicium-Komponenten vorzugsweise 2 bis 97 Gew.-%, besonders bevorzugt 20 bis 95 Gew.-%, am meisten bevorzugt 40 bis 65 Gew.-%, jeweils bezogen auf die Trockenmasse der insgesamt eingesetzten Menge an löslichen Polymeren und Silicium-Komponenten .

Die Siliciumverbindungen α) oder die Kondensationsprodukte β) werden insgesamt bei der Herstellung der Kompositpartikel vorzugsweise zu 20 bis 100 Gew.-% und besonders bevorzugt zu 60 bis 80 Gew.-% eingesetzt, jeweils bezogen auf die Trockenmasse der insgesamt eingesetzten Mengean Silicium-Komponenten.

Die Siliciumverbindungen der Formeln (2) bzw. (3) werden jeweils unabhängig voneinander vorzugsweise zu 0 bis 40 Gew.-% eingesetzt, jeweils bezogen auf die Trockenmasse der insgesamt eingesetzten Menge an Silicium-Komponenten.

Die Silicium-Komponenten sind handelsübliche Produkte oder nach gängigen Methoden herstellbar, wie beispielsweise in Noll, Chemie und Technologie der Silikone, 2. Auflage 1968, Weinheim, oder in Houben-Weyl, Methoden der organischen Chemie, Band E20, Georg Thieme Verlag, Stuttgart (1987) beschrieben.

Als Lösungsmittel für das erfindungsgemäße Verfahren können Wasser oder ein organisches Lösungsmittel, gegebenenfalls in Kombination mit Wasser, oder ein Lösungsmittelgemisch aus mehreren organischen Lösungsmitteln, gegebenenfalls in Kombination mit Wasser, eingesetzt werden. Ein Einsatz von Wasser als Lösungsmittel oder als Komponente des Lösungsmittelgemisches ist nicht zwingend erforderlich, da das in den kommerziell erhältlichen Ausgangsmaterialien enthaltene Restwasser zur Ausführung des erfindungsgemäßen Verfahrens ausreichend ist.

Geeignete organische Lösungsmittel sind beispielsweise Alkohole mit 1 bis 6-C-Atomen, wie Methanol, Ethanol, n-Propanol oder i-Propanol, Ketone, wie Aceton oder Methylethylketon, Ester, wie Methylacetat, Ethylacetat, Propylacetat oder Butylacetat. Bevorzugte Lösungsmittel sind Wasser oder i-Propanol.

Bevorzugte Lösungsmittelgemische enthalten Wasser und i-Propanol.

Die löslichen Polymere sind im jeweiligen erfindungsgemäßen Lösungsmittel oder Lösungsmittelgemisch bei einer beliebigen Temperatur innerhalb des Temperaturbereichs von 1 bis 100°C, vorzugsweise von 20 bis 60°C, und bei einem beliebigen pH-Wert zwischen 2 und 12 vorzugsweise zu mindestens 1 g pro Liter Lösungsmittel oder Lösungsmittelgemisch löslich. Die erfindungsgemäßen Lösungen mit einem Festgehalt an löslichen Polymere von 10 Gew.-% weisen eine Trübung von vorzugsweise ≤ 600 EBC auf (gemäß Formazinstandard nach DIN 38404; bestimmt mit dem Trübungsmessgerät Model TA6FS/Modell 251 der Firma Metrisa GmbH). Auf Grund dieser Löslichkeitseigenschaften wird eine Separation und Aggregation der löslichen Polymere im Zuge der Herstellung der Kompositpartikel unterbunden.

Üblicherweise haben die ethylenisch ungesättigten Carbonsäuren und die ethylenisch ungesättigten Silane (Monomere a)) 2 bis 15 C-Atome.

Beispiele für Monomere a) sind ethylenisch ungesättigte Mono- und Dicarbonsäuren, vorzugsweise Acrylsäure, Methacrylsäure, Fumarsäure und Maleinsäure; Monoester der Fumarsäure und Maleinsäure; ethylenisch ungesättigte Silane wie die Siliciumverbindungen der oben angegebenen

Formel (2) oder (3), beispielsweise Acryloxypropyltri(alkoxy)- oder Methacryloxypropyltri(alkoxy)-Silane, Vinyltrialkoxysilane oder Vinylmethyldialkoxysilane, wobei als Alkoxygruppen beispielsweise Methoxy-, Ethoxy- und Ethoxypropylenglykolether-Reste enthalten sein können.

Besonders bevorzugte Monomere a) sind ethylenisch ungesättigte Monocarbonsäuren, wie insbesondere Methacrylsäure oder Acrylsäure, Vinyltrialkoxysilane, wie insbesondere Vinyltriethoxysilan

Bevorzugte Vinylester (Monomere b)) sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 13 C-Atomen, beispielsweise VeoVa9R oder VeoVa10R (Handelsnamen der Firma Shell). Besonders bevorzugt ist Vinylacetat.

Bevorzugte Methacrylsäureester oder Acrylsäureester (weitere Monomere b)) sind Ester von unverzweigten oder verzweigten A1-koholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat.

Die bevorzugten Monomere b) umfassen also keine Monomere a).

Geeignete lösliche Polymere sind Polymerisate von Vinylestern, insbesondere Vinylacetat, mit 6 bis 15 Gew.-% von ethylenisch ungesättigten Carbonsäuren, wie Acrylsäure oder Methacrylsäure, und gegebenenfalls 0,3 bis 2 Gew.-% von ethylenisch ungesättigten Silanen, wie Vinyltrimethoxysilan, Vinyltriethoxysilan, Vinylmethyldimethoxysilan oder Vinylmethyldiethoxysilan; Polymerisate von Vinylestern, insbesondere Vinylacetat, mit 0,3 bis 2 Gew.-% von ethylenisch ungesättigten Silanen, wie Vinyltrimethoxysilan, Vinyltriethoxysilan, Vinylmethyldimethoxysilan oder Vinylmethyldiethoxysilan; wobei sich die Angaben in Gew.-% auf jeweils 100 Gew.-% aufaddieren.

Geeignete lösliche Polymere sind auch Polymerisate von (Meth)acrylsäureestern, wie Methyl(meth)acrylat und/oder n-Butyl(meth)acrylat, mit 6 bis 15 Gew.-% von ethylenisch ungesättigten Carbonsäuren, wie Acrylsäure oder Methacrylsäure, und gegebenenfalls 0,3 bis 2 Gew.-% von ethylenisch ungesättigten Silanen, wie Vinyltrimethoxysilan, Vinyltriethoxysilan, Vinylmethyldimethoxysilan oder Vinylmethyldiethoxysilan; Polymerisate von (Meth)acrylsäureestern, wie Methyl(meth)acrylat und/oder n-Butyl(meth)acrylat, mit 0,3 bis 2 Gew.-% von ethylenisch ungesättigten Silanen, wie Vinyltrimethoxysilan, Vinyltriethoxysilan, Vinylmethyldimethoxysilan oder Vinylmethyldiethoxysilan; wobei sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die löslichen Polymere auf Basis der Monomere a) und b) können nach dem Fachmann bekannten Suspensions-, Lösungsmittel-, Masse- oder, vorzugsweise, Emulsionspolymerisationsverfahren hergestellt werden, wie beispielsweise in der DE-A 102006050336 beschrieben. Das Emulsionspolymerisationsverfahren wird vorzugsweise bei einem pH-Wert zwischen 3 und 6 durchgeführt.

Zusätzlich zu den löslichen Polymeren auf Basis der Monomere a) und b) können im erfindungsgemäßen Verfahren auch funktionalisierte, teil- oder vollverseifte Polyvinylalkohole eingesetzt werden, die durch Verseifung von solchen löslichen Polymeren erhältlich sind, deren Monomer-Einheiten b) sich ausschließlich oder teilweise von Vinylestern ableiten. Die Herstellung der funktionalisierten, teil- oder vollverseiften Polyvinylalkohole erfolgt nach gängigen Verfahren durch Verseifung der Vinylester-Einheiten enthaltenden löslichen Polymere in alkoholischer Lösung, analog wie beispielsweise in der DE-A 10140131 beschrieben.

Zusätzlich zu löslichen Polymeren auf Basis der Monomere a) und b) können im erfindungsgemäßen Verfahren auch Silan-modifizierte Polyvinylalkohole eingesetzt werden, die durch Behandlung von Vinylalkoholpolymerisaten mit einer oder mehreren Siliciumverbindungen der Formeln (2) oder (3) bei erhöhter Temperatur, wie ≥ 30°C oder vorzugsweise 50°C bis 100°C, erhalten werden. Vorzugsweise werden 1 bis 25 Gew.-% von Siliciumverbindungen der Formeln (2) oder (3) eingesetzt, bezogen auf das Gewicht des Vinylalkoholpolymerisats. Derartige Silan-modifizierten Polyvinylalkohole und deren Herstellung sind in der WO-A 2007/057382 beschrieben. Die zur Herstellung der Silan-modifizierten Polyvinylalkohole eingesetzten Vinylalkoholpolymerisate sind erhältlich durch Verseifung von Polyvinylestern auf Basis von einem oder mehreren der unter den Monomeren b) aufgezählten Vinylestern, vorzugsweise Vinylacetat, sowie gegebenenfalls einem oder mehreren weiteren, von Vinylestern verschiedenen Monomeren b) und gegebenenfalls einem oder mehreren Monomeren a).

Zur Behandlung der Vinylalkoholpolymerisate für die Herstellung der Silan-modifizierten Polyvinylalkohole sind dieselben Siliciumverbindungen der Formeln (2) oder (3) bevorzugt, die auch oben für die Kondensationsreaktion entsprechend aufgeführt sind. Bevorzugte funktionalisierte, teil- oder vollverseifte Polyvinylalkohole werden beispielsweise durch Behandlung von Vinylalkoholpolymerisaten mit Vinyltrimethoxysilan oder Vinyltriethoxysilan erhalten.

Geeignete funktionalisierte, teil- oder vollverseifte Polyvinylalkohole oder Vinylalkoholpolymerisate für die Herstellung der Silan-modifizierten Polyvinylalkohole haben einen Hydrolysegrad der Vinylestereinheiten von vorzugsweise 50 Mol-% bis 99,99 Mol-%, besonders bevorzugt von 70 Mol-% bis 99 Mol-%, am meisten bevorzugt von ≥ 96 Mol-%. Als vollverseift bezeichnet man dabei solche Polymerisate, deren Hydrolysegrad ≥ 96 Mol-% ist. Als teilverseifte Vinylesterpolymerisate sind solche zu verstehen, mit einem Hydrolysegrad > 50 Mol-% und < 96 Mol-%.

Zusätzlich zu den löslichen Polymeren auf Basis der Monomere a) und b) können im erfindungsgemäßen Verfahren auch funktionalisierte Polyvinylacetale eingesetzt werden, die durch teilweise oder vollständige Acetalisierung der funktionalisierten, teil- oder vollverseiften Polyvinylalkohole erhältlich sind. Die Herstellung der funktionalisierten Polyvinylacetale erfolgt nach gängigen Verfahren durch Acetalisierung der genannten Polyvinylalkohole mit Aldehyden, wie beispielsweise in der DE-A 10140131 beschrieben.

Bevorzugte Aldehyde aus der Gruppe der aliphatischen Aldehyde mit 1 bis 15 C-Atomen sind Formaldehyd, Acetaldehyd, Propionaldehyd und am meisten bevorzugt Butyraldehyd oder eine Mischung aus Butyr- und Acetaldehyd. Als aromatische Aldehyde können beispielsweise Benzaldehyd oder dessen Derivate verwendet werden.

Der Acetalisierungsgrad der funktionalisierten Polyvinylacetale kann durch die eingesetzte Menge an Aldehyd eingestellt werden. Denn da die Acetalisierung mit fast vollständigem Umsatz abläuft, kann die Zugabemenge durch einfache stöchiometrische Rechnung bestimmt werden.

Zusätzlich zu den löslichen Polymeren auf Basis der Monomere a) und b) können auch natürliche Polymere oder chemisch oder physikalisch modifizierte natürliche Polymere eingesetzt werden. Beispiele für natürliche Polymere sind Cellulose, Stärke, Xanthane oder Polylactide.

Bei der Herstellung der Kompositpartikel beträgt der Anteil der löslichen Polymere vorzugsweise 3 bis 98 Gew.-%, besonders bevorzugt 5 bis 80 Gew.-% und am meisten bevorzugt 35 bis 60 Gew.-%, jeweils bezogen auf die Trockenmasse der insgesamt eingesetzten Menge an löslichen Polymeren und Silicium-Komponenten.

Im erfindungsgemäßen Verfahren können die Silicium-Komponenten sowie die löslichen Polymere in reiner Form oder in einem Lösungsmittel eingesetzt werden. Die Silicium-Komponenten sowie die löslichen Polymere können in einem Lösungsmittel für die Kondensation komplett vorgelegt werden. Alternativ kann ein Teil der Silicium-Komponenten sowie der löslichen Polymere für die Kondensation vorgelegt werden, und der verbleibende Rest der Silicium-Komponenten und der löslichen Polymere kann während der Kondensation zugegeben werden. Werden die Silicium-Komponenten ganz oder teilweise vorgelegt und werden die löslichen Polymere zeitlich später zugegeben, so kann eine Vorkondensation der Silicium-Komponenten erfolgen, bevor eine Fixierung der dabei gebildeten Partikel auf den löslichen Polymeren erfolgt. Vorzugsweise werden die löslichen Polymere in einem Lösungsmittel oder einem Lösungsmittelgemisch vorgelegt und die Silicium-Komponenten werden in reiner Form ganz oder teilweise während der Kondensation zugegeben.

Die Temperatur während der Kondensation beträgt vorzugsweise 1 bis 100°C, besonders bevorzugt 10 bis 80°C und am meisten bevorzugt 20 bis 60°C. Die Reaktionszeit der Kondensation beträgt vorzugsweise 4 bis 24 Stunden, besonders bevorzugt 5 bis 12 Stunden.

Das Verfahren zur Herstellung der Kompositpartikel wird vorzugsweise bei pH-Werten zwischen 2 und 12 ausgeführt, besonders bevorzugt bei pH-Werten zwischen 7 und 12 und am meisten bevorzugt bei pH-Werten zwischen 8 und 10. Für den Fall, dass die Siliciumverbindungen der Formel (1) eingesetzt werden, die einen oder mehrere Epoxyreste tragen, erfolgt die Herstellung der Kompositpartikel vorzugsweise bei pH-Werten von 4 bis 7.

Der pH-Wert kann in bekannter Weise durch organische oder anorganische Säuren, Basen oder Puffer eingestellt werden, wie beispielsweise durch Zugabe von Salzsäure, Ammoniak oder Alkalihydroxiden, wie beispielsweise Natronlauge. Der pH-Wert kann auch durch die Siliciumverbindungen der Formel (1) und gegebenenfalls der Siliciumverbindungen der Formel (3) eingestellt werden, sofern die genannten Siliciumverbindungen einen Amino-, Ammonium-, Carbon- oder Phosphorsäurerest tragen. Vorzugsweise werden keine mehrwertigen Ionen, wie mehrfach geladene Metallionen, beispielsweise Erdalkaliionen, als Säuren, Basen oder Puffer in die Kompositpartikel eingebracht, da derartige Ionen zu einer Aggregierung von Kompositpartikeln und damit zu einer Gelierung der Kompositpartikel führen können.

Die genannten Säuren, Basen oder Puffer können auch als Katalysator für die Kondensation der Siliciumverbindungen der Formel (1) und gegebenenfalls der Formeln (2) und (3) eingesetzt werden.

Während der Kondensation können Emulgatoren eingesetzt werden. Wird die Kondensation in Gegenwart von Emulgatoren durchgeführt, beträgt deren Menge vorzugsweise 1 bis 5 Gew.-% bezogen auf den Feststoffgehalt. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten. Vorzugsweise werden vor, während oder nach der Kondensation keine Emulgatoren zugesetzt.

Die so erhältlichen Kompositpartikel liegen in Form einer Dispersion vor und haben vorzugsweise einen Feststoffgehalt von 10 bis 65 Gew.-%, besonders bevorzugt von 10 bis 50 Gew.-%, ganz besonders bevorzugt von 20 bis 40 Gew.-% und am meisten bevorzugt von 25 bis 35 Gew.-%.

Nach Abschluss der Kondensationsreaktion können Nebenprodukte, nicht umgesetzte Ausgangsstoffe, Lösungsmittel oder sonstige flüchtige Stoffe mittels Destillation, vorzugsweise unter reduziertem Druck, und gegebenenfalls unter Durchleiten oder Überleiten von Schleppgasen wie Luft, Stickstoff oder Wasserdampf entfernt werden.

Zur Herstellung der Kompositpartikel in Form von Pulvern werden die Dispersionen der Kompositpartikel getrocknet, gegebenenfalls unter Zusatz von Schutzkolloiden als Trocknungshilfe. Geeignete Trocknungsverfahren sind beispielsweise die Wirbelschichttrocknung, die Walzentrocknung, die Gefriertrocknung oder die Sprühtrocknung. Geeignete Trocknungshilfsmittel sind beispielsweise die oben genannten löslichen Polymere. Vorzugsweise werden Polyvinylalkohole als Trocknungshilfsmittel eingesetzt. Vorzugsweise werden die wässrigen Mischungen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt zwischen 60°C bis 90°C gewählt.

Bei der Trocknung hat sich vielfach ein Gehalt von bis zu 1.5 Gew.-% Antischaummittel, bezogen auf die polymeren Bestandteile, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäuren wie beispielsweise hochdisperse Kieselsäuren, Kaoline, Metakaolin, calciniertes Kaolin, Silicate mit Teilchengrößen vorzugsweise im Bereich von 10 nm bis 100 µm.

Die Viskosität der zu trocknenden Dispersion wird über den Feststoffgehalt so eingestellt, dass ein Wert von < 1500 mPas (Brookfield-Viskosität bei 20 Umdrehungen und 23°C), bevorzugt < 500 mPas, erhalten wird.

Zur Verbesserung der anwendungstechnischen Eigenschaften können den Kompositpartikeln weitere Zusätze zugegeben werden. Weitere, in bevorzugten Ausführungsformen enthaltene Bestandteile der Kompositpartikel sind beispielsweise Bindemittel, Pigmente, Füllstoffe wie beispielsweise Zeolithe, Schaumstabilisatoren, Hydrophobierungsmittel oder Luftporenbildner. Vorzugsweise werden diese Zusätze während oder nach der Trocknung der Dispersion zugegeben.

Die so erhaltenen Kompositpartikel in Form von Pulvern können durch anschließendes Mahlen und/oder Redispergieren in Wasser, organischen Lösungsmitteln oder Reaktivverdünner in die gewünschte Form gebracht werden. Als Reaktivverdünner sind beispielsweise die oben unter den Monomeren a) oder Monomeren b) aufgeführten ethylenisch ungesättigten Substanzklassen und Verbindungen geeignet. Bevorzugte Reaktivverdünner sind ethylenisch ungesättigte Aromaten, wie Styrol, (Meth)acrylate, wie Ethylenglykoldimethacrylat, oder Epoxide.

Ein weiterer Gegenstand der Erfindung sind Kompositpartikel erhältlich durch Kondensation von
α) einer oder mehreren Siliciumverbindungen der allgemeinen Formel

(RO)ₙSiR¹₄₋ₙ (1),

worin
R einen gegebenenfalls substituierten Alkyl-, Aryl- oder Alkoxyalkylrest mit 1 bis 20 Kohlenstoffatomen oder Wasserstoffatom,
R¹ einen gegebenenfalls substituierten Kohlenwasserstoffrest mit 1 bis 12 Kohlenstoffatomen oder Wasserstoffatom bedeutet, und
n einen Wert von 2 bis 4 annimmt, oder
β) einem oder mehreren Kondensationsprodukten der Siliciumverbindungen der Formel (1)
in einem Lösungsmittel oder einem Gemisch von mehreren Lösungsmitteln
in Gegenwart von einem oder mehreren löslichen Polymeren, wobei als lösliche Polymere Polymerisate von Vinylestern mit 6 bis 15 Gew.-% von ethylenisch ungesättigten Carbonsäuren und gegebenenfalls 0,3 bis 2 Gew.-% von ethylenisch ungesättigten Silanen; Polymerisate von Vinylestern mit 0,3 bis 2 Gew.-% von ethylenisch ungesättigten Silanen; Polymerisate von (Meth)acrylsäureestern mit 6 bis 15 Gew.-% von ethylenisch ungesättigten Carbonsäuren und gegebenenfalls 0,3 bis 2 Gew.-% von ethylenisch ungesättigten Silanen; oder Polymerisate von (Meth)acrylsäureestern mit 0,3 bis 2 Gew.-% von ethylenisch ungesättigten Silanen eingesetzt werden,
wobei sich die Angaben in Gew.-% auf jeweils 100 Gew.-% aufaddieren,
wobei die löslichen Polymere im vorgenannten Lösungsmittel oder im vorgenannten Gemisch von mehreren Lösungsmitteln bei einer beliebigen Temperatur innerhalb des Temperaturbereichs von 1 bis 100°C und bei einem beliebigen pH-Wert zwischen 2 und 12 zu mindestens 1 g pro Liter Lösungsmittel oder Lösungsmittelgemisch löslich sind, und
wobei dabei gebildete Kondensationsprodukte der Siliciumverbindungen α) oder Kondensationsprodukte β) oder deren Kondensationsprodukte auf einem oder mehreren löslichen Polymeren fixiert werden.

Insbesondere die funktionellen Gruppen der Monomereinheiten a) der löslichen Polymere führen zu einer Fixierung der anorganischen Partikel. Die Fixierung beruht dabei im Wesentlichen auf chemischer Wechselwirkung, wie kovalente Bindungen, oder physikalische Wechselwirkung, wie ionische Bindungen oder Wasserstoffbrückenbindungen. Die anorganischen Partikel sind im Wesentlichen in statistischer Verteilung auf der Polymerkette des löslichen Polymers des jeweiligen Kompositpartikels fixiert.

Die Kompositpartikel haben vorzugsweise eine Viskosität von 20 bis 2.000 mPas (Brookfield-Viskosität bei 25°C als 25 %ige Lösung in Wasser).

Die Kompositpartikel in Form einer wässrigen Dispersion mit einem Festgehalt von 10 Gew.-% weisen eine Trübung von vorzugsweise ≤ 700 EBC, besonders bevorzugt ≤ 600 EBC, ganz besonders bevorzugt ≤ 400 EBC und am meisten bevorzugt ≤ 200 EBC auf (Bestimmung gemäß Formazinstandard nach DIN 38404 bei Raumtemperatur mit dem Trübungsmessgerät der Firma Metrisa GmbH: TA6FS/Model 251).

Die anorganischen Domänen der Kompositpartikel haben mittlere Teilchengrößen von vorzugsweise 5 nm bis 800 nm, besonders bevorzugt von 5 nm bis 50 nm und am meisten bevorzugt von 5 nm bis 30 nm (bestimmt mit dem Transelektronenmikroskop Libra 120 der Firma Zeiss).

Im Zuge der erfindungsgemäßen Kondensation werden vorzugsweise ≥ 30 %, besonders bevorzugt ≥ 40 % und am meisten bevorzugt 70 bis 80 % der hydrolisierbaren oder kondensierbaren Bindungen der Siliciumverbindungen der Formel (1) und gegebenenfalls der Formeln (2) und (3), bezogen auf die Gesamtzahl der hydrolisierbaren oder kondensierbaren Bindungen der genannten Siliciumverbindungen, mit den löslichen Polymeren oder den eingesetzten Siliciumverbindungen oder deren Kondensationsprodukten verknüpft. Hydrolysierbare Bindungen sind insbesondere die Alkoxygruppen RO der Formel (1) oder die Alkoxygruppen OR⁹ der Formel (2). Kondensierbare Bindungen sind insbesondere die an Siliciumatome gebundenen OH-Gruppen.

Die erfindungsgemäßen Kompositpartikel sind in organischen Lösungsmitteln, Reaktivverdünnern oder Wasser oder in Form von Pulvern stabil, auch ohne Zugabe von Stabilisatoren, Emulgatoren oder Schutzkolloiden.

Die Kompositpartikel eignen sich als Bindemittel, Cobindemittel oder Additive zur Verbesserung der anwendungstechnischen Eigenschaften mannigfacher Produkte. Durch Einsatz der Kompositpartikel in Beschichtungsmitteln oder Klebstoffen können beispielsweise deren Thermostabilität oder Kratzfestigkeit gesteigert werden. Kompositpartikel enthaltende Klebstoffe zeigen zudem häufig ein verbessertes Fließverhalten sowie ein stabiles E-Modul bei erhöhter Temperatur und ergeben nach Applikation beispielsweise abziehbare Klebstofffilme. Mit Kompositpartikel enthaltenden Beschichtungsmitteln können Beschichtungen mit Mattierungseffekt ausgestattet werden. Ebenso ist der Einsatz der Kompositpartikel in Formulierungen für Pulverlacke, Kunststoff- und Kompositmaterialien, beispielsweise zur Herstellung von Kunststoff-, Kompositbauteilen oder Verpackungsmaterialien, vorteilhaft. Die Kompositpartikel eignen sich auch zur Oberflächenbehandlung für synthetische oder natürliche Materialien, wie Fasern oder Partikel, wie vorzugsweise Gesteine, Holz, Leder, Papier, Textilien, Kunststoffen, wie Kunststofffolien. Dabei wirken die Kompositpartikel beispielsweise als Primer zur Haftungsverstärkung, als Barriereschicht, Korrosionschutz oder schmutzabweisend. Der schmutzabweisende Effekt kann insbesondere bei entsprechenden Anwendungen in Teppichen oder Auslegware in vorteilhafter Weise ausgenutzt werden. Mit den Kompositpartikeln können auch schwer brennbare Beschichtungen für Holz, Kunststoffe, Leder und Papier hergestellt. Gesteine können verfestigt oder saniert werden. In Produkten der Verpackungsindustrie kann durch Zusatz der Kompositpartikel eine Gasbarriere erzeugt werden.

Die folgenden Beispiele dienen der detaillierten Erläuterung der Erfindung und sind in keiner Weise als Einschränkung zu verstehen.

### Beispiele:

### Herstellung der löslichen Polymere:

### Polymer 1:

In einem Reaktor mit 3 Liter Volumen wurden 839,4 g deionisiertes Wasser, 3,1 g Natriumlaurylsulfat, 0,93 g Kaliumperoxodisulfat in einer Stickstoffatmosphäre vorgelegt und unter Rühren auf 40°C erwärmt. Bei dieser Temperatur wurde eine Mischung folgender Zusammensetzung in den Reaktor gegeben:

| | |
|---|---|
| Vinyltriethoxysilan | 0,7 g |
| Methacrylsäure | 11, 9 g |
| Butylacrylat | 66,8 g |
| Dodecylmercaptan | 1, 0 g |
| Methylmethacrylat | 69,0 g |

Anschließend wurde die Temperatur auf 80°C erhöht und. Nach Erreichen dieser Temperatur wurde die Initiatorlösung (0,93 g Kaliumperoxodisulfat in 98 g Wasser) innerhalb von 3 Stunden zudosiert und gleichzeitig wurde separat während 2,5 Stunden eine Lösung mit folgender Zusammensetzung in den Reaktor gegeben:

| | |
|---|---|
| Vinyltriethoxysilan: | 2,3 g |
| Methacrylsäure: | 37, 6 g |
| Butylacrylat: | 211,5 g |
| Dodecylmercaptan: | 3,3 g |
| Methylmethacrylat: | 218,5 g |

Nach Ende der Dosierungen wurde 2 Stunden bei 80°C und 1 Stunde bei 85°C gerührt.

Anschließend wurde die Polymerdispersion mit Wasser verdünnt und mit einer wässrigen Ammoniaklösung (12,5%-ig) der pH-Wert auf 9 eingestellt. Es wurde eine Polymerlösung mit einem Festgehalt von 20 Gew.-% erhalten. Eine 10 Gew.-%-ige Lösung des Polymers in Wasser wies bei Raumtemperatur eine Trübung von < 600 EBC auf (gemäß Formazinstandard nach DIN 38404; bestimmt mit dem Trübungsmessgerät Model TA6FS/Model 251 der Firma Metrisa GmbH).

### Polymer 2:

Analog zu Beispiel 1, mit dem Unterschied, dass kein Vinyltriethoxysilan eingesetzt wurde. Eine 10 Gew.-%-ige Lösung des Polymers in Wasser wies bei Raumtemperatur eine Trübung von < 600 EBC auf (gemäß Formazinstandard nach DIN 38404; bestimmt mit dem Trübungsmessgerät Model TA6FS/Model 251 der Firma Metrisa GmbH).

### Polymer 3:

Die Vorlage wurde unter Stickstoffatmosphäre und Rühren (100 UpM) auf Rückflusstemperatur (75°-80°C) erwärmt. 15 Minuten nach Erreichen der Rückflusstemperatur wurden 1,5 g tert.-Butylperoxypivalat (PPV) zugesetzt. 45 Minuten nach Erreichen der Rückflusstemperatur wurden die Lösung 1 und die Lösung 2 separat jeweils während 225 Minuten in den Reaktor dosiert.

| | | |
|---|---|---|
| Vorlage: | 707,5 g | i-Propanol, |
| | 71,7 g | Vinylacetat, |
| | 0,35 g | Vinyltriethoxysilan, |
| | 0,84 g | PPV |
| Lösung 1: | 671,6 g | Vinylacetat, |
| | 3,35 g | Vinyltriethoxysilan |
| Lösung 2: | 36,4 g | i-Propanol |
| | 8,4 g | PPV |

30 Minuten nach Ende der Dosierungen wurden 2,0 g PPV zugesetzt und noch für weitere zwei Stunden bei Rückfluss gerührt. Nach Abkühlung auf Raumtemperatur wurde eine Polymerlösung mit einem Festgehalt von 50 Gew.-% erhalten. Eine 10 Gew.-%-ige Lösung des Polymers in i-Propanol wies bei Raumtemperatur eine Trübung von < 600 EBC auf (gemäß Formazinstandard nach DIN 38404; bestimmt mit dem Trübungsmessgerät Model TA6FS/Model 251 der Firma Metrisa GmbH).

### Herstellung von Polysiloxanen:

### Polysiloxan 1:

Unter Rühren wurde eine Mischung aus 500 g Wasser und 200 g Tetraethoxysilan bei 30°C hergestellt und der pH-Wert mit Ammoniak auf 9 eingestellt. Nach 2 h war eine klare Lösung enstanden. Es wurde für weitere 8 h bei 30°C gerührt. Anschließend wurden die flüchtigen Komponenten und ein Teil des Wassers unter vermindertem Druck bei 60°C abdestilliert und die Dispersion auf Raumtemperatur abgekühlt und filtriert (Maschenweite 70 Mikrometer). Die so erhaltene Dispersion war stabil, homogen und stippenfrei.

### Polysiloxan 2:

Unter Rühren wurde eine Mischung aus 500 g Wasser, 170 g Tetraethoxysilan und 30 g Trimethylethoxysilan wurde bei 30°C hergestellt und der pH-Wert mit Ammoniak auf 9 eingestellt. Nach 2 h war eine klare Lösung entstanden. Es wurde für weitere 8 h bei 30°C gerührt. Anschließend wurden die flüchtigen Komponenten und ein Teil des Wassers unter vermindertem Druck bei 60°C abdestilliert und die Dispersion auf Raumtemperatur abgekühlt und filtriert (Maschenweite 70 Mikrometer). Die so erhaltene Dispersion war stabil, homogen und stippenfrei.

### Herstellung von Kompositpartikeln in Form von wässrigen Dispersionen

### Beispiel 1:

In einem Doppelmantelreaktor wurden bei Raumtemperatur unter Rühren 900 g der 20%-igen, wässrigen Polymerlösung des Polymers 1 vorgelegt, 197 g Wasser zugegeben und der pH-Wert mit wässrigem Ammoniak (12,5 %-ig) auf 9 gebracht. Es wurde auf 35°C erwärmt, und nach 10-minütigem Rühren wurden 255 g Methyltriethoysilan und 35 g Trimethylethoxysilan während 20 Minuten zugegeben. Es wurde 4 Stunden bei 35°C und anschließend 2 Stunden bei 60°C gerührt. Schließlich wurden die flüchtigen Komponenten der Reaktionsmischung und ein Teil des Wassers bei einem Druck von 20 mbar und bei einer Temperatur von 60°C abdestilliert. Es wurde eine stabile, homogene und stippenfreie Dispersion der Kompositpartikel erhalten.

Die Kompositpartikel hatten eine Viskosität von 120 mPas (Brookfield-Viskosität bei 25°C als 25 %-ige Lösung in Wasser). Eine Dispersion der Kompositpartikel mit einem Festgehalt von 10 Gew.-% in Wasser wies bei Raumtemperatur eine Trübung von < 600 EBC auf (gemäß Formazinstandard nach DIN 38404; bestimmt mit dem Trübungsmessgerät Model TA6FS/Model 251 der Firma Metrisa GmbH). Die anorganischen Domänen der Kompositpartikel hatten eine mittlere Teilchengröße von < 20 nm (bestimmt mit dem Transelektronenmikroskop Libra 120 der Firma Zeiss).

### Beispiel 2:

Analog zu Beispiel 1, mit dem Unterschied, dass an Stelle von Methyltriethoysilan und Trimethylethoxysilan 261 g Methyltriethoysilan und 29 g (3-Aminopropyl)triethoxysilan eingesetzt wurden.

Es wurde eine stabile, homogene und stippenfreie Dispersion der Kompositpartikel erhalten.

Die Kompositpartikel hatten eine Viskosität von 190 mPas (Brookfield-Viskosität bei 25°C als 25 %-ige Lösung in Wasser). Eine Dispersion der Kompositpartikel mit einem Festgehalt von 10 Gew.-% in Wasser wies bei Raumtemperatur eine Trübung von < 600 EBC auf (gemäß Formazinstandard nach DIN 38404; bestimmt mit dem Trübungsmessgerät Model TA6FS/Model 251 der Firma Metrisa GmbH). Die anorganischen Domänen der Kompositpartikel hatten eine mittlere Teilchengröße von < 20 nm (bestimmt mit dem Transelektronenmikroskop Libra 120 der Firma Zeiss).

### Beispiel 3:

Analog zu Beispiel 1, mit dem Unterschied, dass an Stelle von Methyltriethoysilan und Trimethylethoxysilan 261 g Methyltriethoysilan und 29 g (3-Glycidoxypropyl)triethoxysilan eingesetzt wurden.

Es wurde eine stabile, homogene und stippenfreie Dispersion der Kompositpartikel erhalten.

Die Kompositpartikel hatten eine Viskosität von 2000 mPas (Brookfield-Viskosität bei 25°C als 30 %-ige Lösung in Wasser). Eine Dispersion der Kompositpartikel mit einem Festgehalt von 10 Gew.-% in Wasser wies bei Raumtemperatur eine Trübung von < 600 EBC auf (gemäß Formazinstandard nach DIN 38404; bestimmt mit dem Trübungsmessgerät Model TA6FS/Model 251 der Firma Metrisa GmbH). Die anorganischen Domänen der Kompositpartikel hatten eine mittlere Teilchengröße von < 20 nm (bestimmt mittels dem Transelektronenmikroskop Libra 120 der Firma Zeiss).

### Beispiel 4:

Analog zu Beispiel 1, mit dem Unterschied, dass an Stelle der wässrigen Polymerlösung des Polymers 1 die wässrige Polymerlösung des Polymers 2 verwendet wurde.

Es wurde eine stabile, homogene und stippenfreie Dispersion der Kompositpartikel erhalten.

Die Kompositpartikel hatten eine Viskosität von 250 mPas (Brookfield-Viskosität bei 25°C als 30 %-ige Lösung in Wasser). Eine Dispersion der Kompositpartikel mit einem Festgehalt von 10 Gew.-% in Wasser wies bei Raumtemperatur eine Trübung von < 600 EBC auf (gemäß Formazinstandard nach DIN 38404; bestimmt mit dem Trübungsmessgerät Model TA6FS/Model 251 der Firma Metrisa GmbH). Die anorganischen Domänen der Kompositpartikel hatten eine mittlere Teilchengröße von < 20 nm (bestimmt mittels dem Transelektronenmikroskop Libra 120 der Firma Zeiss).

### Beispiel 5:

In einem Doppelmantelreaktor wurden unter Rühren 400 g der 50 %-igen Lösung des Polymers 3 in i-Propanol vorgelegt, 400 g i-Propanol zugegeben und auf 60°C erwärmt. Nach 10 minütigem Rühren bei 60°C wurden 110 g Methyltriethoysilan und 35 g α-Methacrylatometh-trimethoxysilan während 20 Minuten zudosiert. Nach Abschluss der Dosierung wurde für weitere 14 Stunden bei 60°C gerührt. Anschließend wurden die flüchtigen Komponenten und ein Teil des i-Propanols bei einem Druck von 20 mbar und einer Temperatur von 60°C abdestilliert.

Es wurde eine stabile, homogene und stippenfreie Dispersion der Kompositpartikel erhalten.

Die Kompositpartikel hatten eine Viskosität von 280 mPas (Brookfield-Viskosität bei 25°C als 30 %-ige Lösung in Wasser). Die anorganischen Domänen der Kompositpartikel hatten eine mittlere Teilchengröße von < 30 nm (bestimmt mittels dem Transelektronenmikroskop Libra 120 der Firma Zeiss).

### Vergleichsbeispiel 6:

Stabilitätstest: 50 g der Dispersion des Polysiloxans 1 wurden für 15 min bei 75°C gehalten und anschließend unter dem Lichtmikroskop bezüglich der Agglomeration untersucht. Es wurde eine starke Agglomeration von Partikeln festgestellt.

### Vergleichsbeispiel 7:

Stabilitätstest: 50 g der Dispersion des Polysiloxans 2 wurden für 15 min bei 75°C gehalten und anschließend unter dem Lichtmikroskop bezüglich der Agglomeration untersucht. Es wurde eine starke Agglomeration von Partikeln festgestellt.

### Beispiel 8:

In einem Doppelmantelreaktor wurden 500 g einer Dispersion des Polysiloxans 1 (FG = 40 Gew.-%) und 1500 g der 20%igen wässrigen Lösung des Polymers 1 vorgelegt, der pH-Wert mit Ammoniak auf 9 eingestellt und unter Rühren auf 50°C erwärmt. Nach 6 Stunden bei 50°C wurden die flüchtigen Komponenten und ein Teil des Wassers unter vermindertem Druck bei 60°C abdestilliert und die Dispersion auf Raumtemperatur abgekühlt und filtriert (Maschenweite 70 Mikrometer).

Es wurde eine stabile, homogene und stippenfreie Dispersion der Kompositpartikel erhalten.

Die Kompositpartikel hatten eine Viskosität von 900 mPas (Brookfield-Viskosität bei 25°C als 30 %-ige Lösung in Wasser). Die anorganischen Domänen der Kompositpartikel hatten eine mittlere Teilchengröße von < 20 nm (bestimmt mittels dem Transelektronenmikroskop Libra 120 der Firma Zeiss).

Zur Untersuchung der Thermostabilität wurden 50 g der erhaltenen Dispersion für 30 min bei 75°C gehalten und anschließend unter dem Lichtmikroskop hinsichtlich der Agglomeration von Kompositpartikeln untersucht. Es trat keine Agglomeratbildung auf.

### Beispiel 9:

In einem Doppelmantelreaktor wurden 500 g einer Dispersion des Polysiloxans 2 (FG = 40 Gew.-%) und 1500 g der 20%igen wässrigen Lösung des Polymers 1 vorgelegt, der pH-Wert mit Ammoniak auf 9 eingestellt und unter Rühren auf 50°C erwärmt. Nach 6 Stunden bei 50°C wurden die flüchtigen Komponenten und ein Teil des Wassers unter vermindertem Druck bei 60°C abdestilliert und die Dispersion auf Raumtemperatur abgekühlt und filtriert (Maschenweite 70 Mikrometer).

Es wurde eine stabile, homogene und stippenfreie Dispersion der Kompositpartikel erhalten.

Die Kompositpartikel hatten eine Viskosität von 1200 mPas (Brookfield-Viskosität bei 25°C als 30 %-ige Lösung in Wasser). Die anorganischen Domänen der Kompositpartikel hatten eine mittlere Teilchengröße von < 20 nm (bestimmt mittels dem Transelektronenmikroskop Libra 120 der Firma Zeiss).

Zur Untersuchung der Thermostabilität wurden 50 g der erhaltenen Dispersion für 30 min bei 75°C gehalten und anschließend unter dem Lichtmikroskop hinsichtlich der Agglomeration von Kompositpartikeln untersucht. Es trat keine Agglomeratbildung auf.

## Patentansprüche

1. Verfahren zur Herstellung von Kompositpartikeln, **dadurch gekennzeichnet, dass**
α) ein oder mehrere Siliciumverbindungen der allgemeinen Formel
(RO)ₙSiR¹₄₋ₙ (1),
worin
R einen gegebenenfalls substituierten Alkyl- oder Arylrest mit 1 bis 20 Kohlenstoffatomen oder ein Wasserstoffatom,
R¹ einen gegebenenfalls substituierten Kohlenwasserstoffrest oder ein Wasserstoffatom bedeutet, und
n einen Wert von 1 bis 4 annimmt, oder
β) ein oder mehrere Kondensationsprodukte der Siliciumverbindungen der Formel (1)
in einem Lösungsmittel oder einem Gemisch von mehreren Lösungsmitteln
in Gegenwart von einem oder mehreren löslichen Polymeren kondensiert werden,
wobei als lösliche Polymere
Polymerisate von Vinylestern mit 6 bis 15 Gew.-% von ethylenisch ungesättigten Carbonsäuren und gegebenenfalls 0,3 bis 2 Gew.-% von ethylenisch ungesättigten Silanen; Polymerisate von vinylestern mit 0,3 bis 2 Gew.-% von ethylenisch ungesättigten Silanen; Polymerisate von (Meth)acrylsäureestern mit 6 bis 15 Gew.-% von ethylenisch ungesättigten Carbonsäuren und gegebenenfalls 0,3 bis 2 Gew.-% von ethylenisch ungesättigten Silanen; oder Polymerisate von (Meth)acrylsäureestern mit 0,3 bis 2 Gew.-% von ethylenisch ungesättigten Silanen eingesetzt werden,
wobei sich die Angaben in Gew.-% auf jeweils 100 Gew.-% aufaddieren,
wobei die löslichen Polymere im vorgenannten Lösungsmittel oder im vorgenannten Gemisch von mehreren Lösungsmitteln bei einer beliebigen Temperatur innerhalb des Temperaturbereichs von 1 bis 100°C und bei einem beliebigen pH-Wert zwischen 2 und 12 zu mindestens 1 g pro Liter Lösungsmittel oder Lösungsmittelgemisch löslich sind, und
wobei dabei gebildete Kondensationsprodukte der Siliciumverbindungen α) oder Kondensationsprodukte β) oder deren Kondensationsprodukte auf einem oder mehreren löslichen Polymeren fixiert werden.

2. Verfahren zur Herstellung von Kompositpartikeln nach Anspruch 1, **dadurch gekennzeichnet, dass**
als Kondensationsprodukte β) Organopolysiloxane eingesetzt werden, die aus Einheiten der allgemeinen Formel
R¹ₓSi(OR)_{y}O_{(4-x-y)/2} (4)
aufgebaut sind, worin x 0, 1, 2 oder 3 und y 0, 1 oder 2 ist,
mit der Maßgabe, dass die Summe x+y≤3 ist,
R¹ gleich oder verschieden sein kann und einen gegebenenfalls substituierten Kohlenwasserstoffrest oder ein Wasserstoffatom bedeutet, und
R gleich oder verschieden sein kann und einen gegebenenfalls substituierten Alkyl- oder Arylrest mit 1 bis 20 Kohlenstoffatomen oder ein Wasserstoffatom bedeutet.

3. Verfahren zur Herstellung von Kompositpartikeln nach Anspruch 1 oder 2, **dadurch gekennzeichnet, dass** der Rest R¹ für eine Gruppe R²X steht,
in der der Rest R² einen gegebenenfalls substituierten Alkylen-Rest mit 1 bis 20 Kohlenstoffatomen, vorzugsweise mit 1 bis 6 Kohlenstoffatomen bedeutet,
in dem einander nicht benachbarte Methyleneinheiten durch Gruppen -O- ersetzt sein können, und
X über eine kovalente Bindung an den Rest R² gebunden ist und für einen Aminorest NHR³, einen Epoxyrest CR⁴(O)CR⁵R⁶, einen Urethanrest NR³-C(=O)OR³, einen Harnstoffrest NR³-C(=O)NR³R⁴, ein Phosphorsäurerest P(=O) (OH)₂, ein Anhydridrest C(=O)O(O=)CR³ oder einen Carbonsäurerest steht, wobei
R³ ein Wasserstoffatom oder einen gegebenenfalls substituierten Alkyl-, Aryl- oder Aminoalkyrest mit 1 bis 10 Kohlenstoffatomen bedeutet,
R⁴, R⁵, R⁶ ein Wasserstoffatom oder einen gegebenenfalls substituierten Alkyl- oder Arylrest mit 1 bis 10 Kohlenstoffatomen bedeutet,
wobei die jeweiligen Reste R², R³, R⁴, R⁵ und R⁶ ihre Werte jeweils unabhängig voneinander annehmen, und
wobei die Gruppe R²X über ein Kohlenstoffatom des Restes R² an das Siliciumatom der Formel (1) gebunden ist.

4. Verfahren zur Herstellung von Kompositpartikeln nach Anspruch 1 bis 3, **dadurch gekennzeichnet, dass** als Siliciumverbindungen der Formel (1) Tetramethoxysilan, Tetraethoxysilan, Methyltrimethoxysilan, Methyltriethoxysilan, Dimethyldimethoxysilan, Dimethyldiethoxysilan, Isooctyltrimethoxysilan, Isooctyltriethoxysilan, (Cyclohexyl)methyldimethoxysilan, Dicyclopentyldimethoxysilan, Phenyltriethoxysilan, (3-Aminopropyl)triethoxysilan, (3-Aminopropyl)trimethoxysilan, N-(2-Aminoethyl)(3-Aminopropyl)triethoxysilan, N-(2-Aminoethyl)(3-Aminopropyl)trimethoxysilan, N-(2-Aminoethyl)(3-Aminopropyl)methyldimethoxysilan, 3-(Triethoxysilyl)propylbernsteinsäureanhydrid, N-Cyclohexylaminomethylmethyldiethoxysilan, N-(3-(Triethoxysilyl)propyl)-methylurethan, N-(3-(Trimethoxysilyl)propyl)-methylurethan, N-(3-(Triethoxysilyl)propyl)-harnstoff, N-(3-(Trimethoxysilyl)propyl)-harnstoff, (3-Glycidoxypropyl)-triethoxysilan oder (3-Glycidoxypropyl)trimethoxysilan eingesetzt werden.

5. Verfahren zur Herstellung von Kompositpartikeln nach Anspruch 1 bis 4, **dadurch gekennzeichnet, dass** zusätzlich ein oder mehrere ethylenisch ungesättigte Siliciumverbindungen der Formel (2) R⁷SiR⁸₀₋₂(OR⁹)₁₋₃ eingesetzt werden, worin R⁷ die Bedeutung CH₂=CR¹⁰-(CH₂)₀₋₁ oder CH₂=CR¹⁰CO₂(CH₂)₁₋₃ hat, R⁸ die Bedeutung C₁- bis C₃-Alkylrest, C₁- bis C₃-Alkoxyrest oder Halogen, R⁹ ein unverzweigter oder verzweigter, gegebenenfalls substituierter Alkylrest mit 1 bis 12 C-Atomen oder ein Acylrest mit 2 bis 12 C-Atomen ist, wobei R⁹ gegebenenfalls durch eine Ethergruppe unterbrochen sein kann, und R¹⁰ für H oder CH₃ steht.

6. Verfahren zur Herstellung von Kompositpartikeln nach Anspruch 1 bis 5, **dadurch gekennzeichnet, dass** als Lösungsmittel Wasser, ein organisches Lösungsmittel, ein organisches Lösungsmittel in Kombination mit Wasser, ein Lösungsmittelgemisch aus mehreren organischen Lösungsmitteln oder ein Lösungsmittelgemisch aus mehreren organischen Lösungsmitteln in Kombination mit Wasser eingesetzt werden.

7. Verfahren zur Herstellung von Kompositpartikeln nach Anspruch 1 bis 6, **dadurch gekennzeichnet, dass** zusätzlich Silan-modifizierte Polyvinylalkohole eingesetzt werden erhältlich durch
Behandlung von Vinylalkoholpolymerisaten mit einer oder mehreren ethylenisch ungesättigten Siliciumverbindungen der Formel (2) R⁷SiR⁸₀₋₂(OR⁹)₁₋₃, worin R⁷ die Bedeutung CH₂=CR¹⁰-(CH₂)₀₋₁ oder CH₂=CR¹⁰CO₂(CH₂)₁₋₃ hat, R⁸ die Bedeutung C₁- bis C₃-Alkylrest, C₁- bis C₃-Alkoxyrest oder Halogen, R⁹ ein unverzweigter oder verzweigter, gegebenenfalls substituierter Alkylrest mit 1 bis 12 C-Atomen oder ein Acylrest mit 2 bis 12 C-Atomen ist, wobei R⁹ gegebenenfalls durch eine Ethergruppe unterbrochen sein kann, und R¹⁰ für H oder CH₃ steht,
bei erhöhter Temperatur.

8. Kompositpartikel erhältlich durch Kondensation von
α) einer oder mehreren Siliciumverbindungen der allgemeinen Formel
(RO)ₙSiR¹₄₋ₙ (1),
worin
R einen gegebenenfalls substituierten Alkyl-, Aryl- oder Alkoxyalkylrest mit 1 bis 20 Kohlenstoffatomen oder Wasserstoffatom,
R¹ einen gegebenenfalls substituierten Kohlenwasserstoffrest mit 1 bis 12 Kohlenstoffatomen oder Wasserstoffatom bedeutet, und
n einen Wert von 2 bis 4 annimmt, oder
β) einem oder mehreren Kondensationsprodukten der Siliciumverbindungen der Formel (1)
in einem Lösungsmittel oder einem Gemisch von mehreren Lösungsmitteln
in Gegenwart von einem oder mehreren löslichen Polymeren, wobei als lösliche Polymere
Polymerisate von Vinylestern mit 6 bis 15 Gew.-% von ethylenisch ungesättigten Carbonsäuren und gegebenenfalls 0,3 bis 2 Gew.-% von ethylenisch ungesättigten Silanen; Polymerisate von Vinylestern mit 0,3 bis 2 Gew.-% von ethylenisch ungesättigten Silanen; Polymerisate von (Meth)acrylsäureestern mit 6 bis 15 Gew.-% von ethylenisch ungesättigten Carbonsäuren und gegebenenfalls 0,3 bis 2 Gew.-% von ethylenisch ungesättigten Silanen; oder Polymerisate von (Meth)acrylsäureestern mit 0,3 bis 2 Gew.-% von ethylenisch ungesättigten Silanen eingesetzt werden,
wobei sich die Angaben in Gew.-% auf jeweils 100 Gew.-% aufaddieren,
wobei die löslichen Polymere im vorgenannten Lösungsmittel oder im vorgenannten Gemisch von mehreren Lösungsmitteln bei einer beliebigen Temperatur innerhalb des Temperaturbereichs von 1 bis 100°C und bei einem beliebigen pH-Wert zwischen 2 und 12 zu mindestens 1 g pro Liter Lösungsmittel oder Lösungsmittelgemisch löslich sind, und
wobei dabei gebildete Kondensationsprodukte der Siliciumverbindungen α) oder Kondensationsprodukte β) oder deren Kondensationsprodukte auf einem oder mehreren löslichen Polymeren fixiert werden.

9. Verwendung der Kompositpartikel gemäß Anspruch 8 als Bindemittel, Cobindemittel oder Additiv für Pulverlacke, Beschichtungsmittel, Klebstoffe oder in Formulierungen für Kunststoff- oder Kompositmaterialien.

10. Verwendung der Kompositpartikel gemäß Anspruch 8 zur Oberflächenbehandlung von synthetischen oder natürlichen Materialien, wie Gesteine, Holz, Leder, Papier, Textilien oder Kunststoffe.

11. Verwendung der Kompositpartikel gemäß Anspruch 8 bei der Herstellung von Teppichen oder Auslegware.

12. Verwendung der Kompositpartikel gemäß Anspruch 8 für die Herstellung von Barriereschichten.

## Claims

1. Process for producing composite particles, **characterized in that**
α) one or more silicon compounds of the general formula
(RO)ₙSiR¹₄₋ₙ (1)
in which R is an optionally substituted alkyl or aryl radical having 1 to 20 carbon atoms or a hydrogen atom,
R¹ is an optionally substituted hydrocarbon radical or a hydrogen atom, and
n is from 1 to 4, or
β) one or more condensation products of the silicon compounds of the formula (1) are condensed in a solvent or a mixture of two or more solvents
in the presence of one or more soluble polymers, the soluble polymers used being
polymers of vinyl esters with 6 to 15% by weight of ethylenically unsaturated carboxylic acids and optionally 0.3 to 2% by weight of ethylenically unsaturated silanes; polymers of vinyl esters with 0.3 to 2% by weight of ethylenically unsaturated silanes; polymers of (meth)acrylic esters with 6 to 15% by weight of ethylenically unsaturated carboxylic acids and optionally 0.3 to 2% by weight of ethylenically unsaturated silanes; or polymers of (meth)acrylic esters with 0.3 to 2% by weight of ethylenically unsaturated silanes; where the figures in % by weight add up to 100% by weight in each case,
the soluble polymers being soluble in the aforementioned solvent or in the aforementioned mixture of two or more solvents at any temperature within the temperature range from 1 to 100°C and at any pH between 2 and 12 in an amount of at least 1 g per liter of solvent or solvent mixture, and
condensation products formed from the silicon compounds α), or condensation products β) or condensation products thereof, are fixed on one or
more soluble polymers.

2. Process for producing composite particles according to Claim 1, **characterized in that** the condensation products β) used are organopolysiloxanes formed from units of the general formula
R¹ₓSi(OR)_{y}O(_{4-x-y)/2} (4)
in which x is 0, 1, 2 or 3 and y is 0, 1 or 2,
with the proviso that the sum of x+y≤3,
R¹ may be the same or different and is an optionally substituted hydrocarbon radical or a hydrogen atom, and
R may be the same or different and is an optionally substituted alkyl or aryl radical having 1 to 20 carbon atoms or a hydrogen atom.

3. Process for producing composite particles according to Claim 1 or 2, **characterized in that** the R¹ radical is an R²X group
in which the R² radical is an optionally substituted alkylene radical having 1 to 20 carbon atoms, preferably having 1 to 6 carbon atoms,
in which nonadjacent methylene units may be replaced by -O- groups, and
X is bonded to the R² radical via a covalent bond and is an amino radical NHR³, an epoxy radical CR⁴(O)CR⁵R⁶, a urethane radical NR³-C(=O)OR³, a urea radical NR³-C(=O) NR³R⁴, a phospho radical P(=O)(OH)₂, an anhydride radical C(=O)O(O=)CR³ or a carboxylic acid radical, where
R³ is a hydrogen atom or an optionally substituted alkyl, aryl or aminoalkyl radical having 1 to 10 carbon atoms,
R⁴, R⁵, R⁶ is a hydrogen atom or an optionally substituted alkyl or aryl radical having 1 to 10 carbon atoms,
where the particular R², R³, R⁴, R⁵ and R⁶ radicals are each selected independently of one another, and
where the R²X group is bonded to the silicon atom of the formula (1) via a carbon atom of the R² radical.

4. Process for producing composite particles according to Claims 1 to 3, **characterized in that** the silicon compounds of the formula (1) used are tetramethoxysilane, tetraethoxysilane, methyltrimethoxysilane, methyltriethoxysilane, dimethyldimethoxysilane, dimethyldiethoxysilane, isooctyltrimethoxysilane, isooctyltriethoxysilane, (cyclohexyl)methyldimethoxysilane, dicyclopentyldimethoxysilane, phenyltriethoxysilane, (3-aminopropyl)triethoxysilane, (3-aminopropyl)trimethoxysilane, N-(2-aminoethyl)(3-aminopropyl)triethoxysilane, N-(2-aminoethyl)(3-aminopropyl)trimethoxysilane, N-(2-aminoethyl) (3-aminopropyl)methyldimethoxysilane, 3-(triethoxysilyl)propylsuccinic anhydride, N-cyclohexylaminomethylmethyldiethoxysilane, N-(3-(triethoxysilyl)propyl)methylurethane, N-(3-(trimethoxysilyl)propyl)methylurethane, N-(3-(triethoxysilyl)propyl)urea, N-(3-(trimethoxysilyl)propyl)urea, (3-glycidoxypropyl)-triethoxysilane or (3-glycidoxypropyl)trimethoxysilane.

5. Process for producing composite particles according to Claims 1 to 4, **characterized in that** one or more ethylenically unsaturated silicon compounds of the formula (2) R⁷SiR⁸₀₋₂(OR⁹)₁₋₃ are additionally used, in which R⁷ is defined as CH₂=CR¹⁰-(CH₂)₀₋₁ or CH₂=CR¹⁰CO₂(CH₂)₁₋₃, R⁸ is defined as C₁- to C₃-alkyl radical, C₁- to C₃-alkoxy radical or halogen, R⁹ is an unbranched or branched, optionally substituted alkyl radical having 1 to 12 carbon atoms or an acyl radical having 2 to 12 carbon atoms, where R⁹ may optionally be interrupted by an ether group, and R¹⁰ is H or CH₃.

6. Process for producing composite particles according to Claims 1 to 5, **characterized in that** the solvent used is water, an organic solvent, an organic solvent in combination with water, a solvent mixture of two or more organic solvents or a solvent mixture of two or more organic solvents in combination with water.

7. Process for producing composite particles according to Claims 1 to 6, **characterized in that** silane-modified polyvinyl alcohols are additionally used, being obtainable by treating vinyl alcohol polymers
with one or more ethylenically unsaturated silicon compounds of the formula (2) R⁷SiR⁸₀₋₂(OR⁹)₁₋₃ in which R⁷ is defined as CH₂=CR¹⁰- (CH₂)₀₋₁ or CH₂=CR¹⁰CO₂(CH₂)₁₋₃, R⁸ is defined as C₁- to C₃-alkyl radical, C₁- to C₃-alkoxy radical or halogen, R⁹ is an unbranched or branched, optionally substituted alkyl radical having 1 to 12 carbon atoms or an acyl radical having 2 to 12 carbon atoms, where R⁹ may optionally be interrupted by an ether group, and
R¹⁰ is H or CH₃,
at elevated temperature.

8. Composite particles obtainable by condensation of
α) one or more silicon compounds of the general formula
(RO)ₙSiR¹₄₋ₙ (1)
in which R is an optionally substituted alkyl, aryl or alkoxy alkyl radical having 1 to 20 carbon atoms or a hydrogen atom,
R¹ is an optionally substituted hydrocarbon radical having 1 to 12 carbon atoms or a hydrogen atom, and
n is from 2 to 4, or
β) one or more condensation products of the silicon compounds of the formula (1) in a solvent or a mixture of two or more solvents in the presence of one or more soluble polymers, the soluble polymers used being
polymers of vinyl esters with 6 to 15% by weight of ethylenically unsaturated carboxylic acids and optionally 0.3 to 2% by weight of ethylenically unsaturated silanes; polymers of vinyl esters with 0.3 to 2% by weight of ethylenically unsaturated silanes; polymers of (meth)acrylic esters with 6 to 15% by weight of ethylenically unsaturated carboxylic acids and optionally 0.3 to 2% by weight of ethylenically unsaturated silanes; or polymers of (meth)acrylic esters with 0.3 to 2% by weight of ethylenically unsaturated silanes; where the figures in % by weight add up to 100% by weight in each case,
the soluble polymers being soluble in the aforementioned solvent or in the aforementioned mixture of two or more solvents at any temperature within the temperature range from 1 to 100°C and at any pH between 2 and 12 in an amount of at least 1 g per liter of solvent or solvent mixture, and
condensation products formed from the silicon compounds α) or condensation products β), or condensation products thereof, being fixed on one or more soluble polymers.

9. Use of the composite particles according to Claim 8 as a binder, cobinder or additive for powder coatings, coating materials, adhesives, or in formulations for polymer or composite materials.

10. Use of the composite particles according to Claim 8 for surface treatment of synthetic or natural materials, such as stone, wood, leather, paper, textiles or plastics.

11. Use of the composite particles according to Claim 8 in the production of carpets or fitted carpets.

12. Use of the composite particles according to Claim 8 for the production of barrier layers.

## Revendications

1. Procédé pour la préparation de particules composites, **caractérisé en ce que**
α) un ou plusieurs composés du silicium de formule générale
(RO)ₙSiR¹₄₋ₙ (1),
où
R signifie un radical alkyle ou aryle le cas échéant substitué comprenant 1 à 20 atomes de carbone ou un atome d'hydrogène,
R¹ signifie un radical hydrocarboné le cas échéant substitué ou un atome d'hydrogène et
n vaut 1 à 4, ou
β) un ou plusieurs produits de condensation des composés du silicium de formule générale (1)
sont condensés dans un solvant ou un mélange de plusieurs solvants, en présence d'un ou de plusieurs polymères solubles,
en utilisant comme polymères solubles des polymères d'esters de vinyle comprenant 6 à 15% en poids d'acides carboxyliques éthyléniquement insaturés et le cas échéant 0,3 à 2% en poids de silanes éthyléniquement insaturés ; des polymères d'esters de vinyle comprenant 0,3 à 2% en poids de silanes éthyléniquement insaturés ; des polymères d'esters de l'acide (méth)acrylique comprenant 6 à 15% en poids d'acides carboxyliques éthyléniquement insaturés et le cas échéant 0,3 à 2% en poids de silanes éthyléniquement insaturés ; ou des polymères d'esters de l'acide (méth)acrylique comprenant 0,3 à 2% en poids de silanes éthyléniquement insaturés,
la somme des indications en % en poids valant à chaque fois 100% en poids,
les polymères solubles étant solubles dans le solvant susmentionné ou dans le mélange susmentionné de plusieurs solvants à une température quelconque dans la plage de températures de 1 à 100°C et à un pH quelconque entre 2 et 12 à raison d'au moins 1 g par litre de solvant ou de mélange de solvants, et
des produits de condensation ainsi formés des composés de silicium α) ou des produits de condensation β) ou leurs produits de condensation étant fixés sur un ou plusieurs polymères solubles.

2. Procédé pour la préparation de particules composites selon la revendication 1, **caractérisé en ce qu'**on utilise comme produits de condensation β) des organopolysiloxanes qui sont constitués par des unités de formule générale
R¹ₓSi(OR)_{y}O_{(4-x-y)/2} (4)
où
x vaut 0, 1, 2 ou 3 et
y vaut 0, 1 ou 2,
à condition que la somme x + y ≤ 3,
R¹ peut être identique ou différent et signifie un radical hydrocarboné le cas échéant substitué ou un atome d'hydrogène, et
R peut être identique ou différent et signifie un radical alkyle ou aryle le cas échéant substitué comprenant 1 à 20 atomes de carbone ou un atome d'hydrogène.

3. Procédé pour la préparation de particules composites selon la revendication 1 ou 2, **caractérisé en ce que** le radical R¹ représente un groupe R²X,
dans lequel le radical R² signifie un radical alkylène le cas échéant substitué comprenant 1 à 20 atomes de carbone, de préférence 1 à 6 atomes de carbone,
dans lequel des unités méthylène non adjacentes peuvent être remplacées par des groupes -O-, et
X est lié via une liaison covalente au radical R² et représente un radical amino NHR³, un radical époxy CR⁴(O)CR⁵R⁶, un radical uréthane NR³-C(=O)OR³, un radical urée NR³-C (=O)NR³R⁴, un radical acide phosphorique P(=O)(OH)₂, un radical anhydride C (=O) O (O=) CR³ ou un radical acide carboxylique, où
R³ signifie un atome d'hydrogène ou un radical alkyle, aryle ou aminoalkyle le cas échéant substitué comprenant 1 à 10 atomes de carbone,
R⁴, R⁵, R⁶ signifient un atome d'hydrogène ou un radical alkyle ou aryle le cas échéant substitué comprenant 1 à 10 atomes de carbone,
où les différents radicaux R², R³, R⁴, R⁵ et R⁶ prennent leurs valeurs à chaque fois indépendamment l'un de l'autre, et
où le groupe R²X est lié via un atome de carbone du radical R² à l'atome de silicium de formule (1).

4. Procédé pour la préparation de particules composites selon les revendications 1 à 3, **caractérisé en ce qu'**on utilise, comme composés du silicium de formule (1), le tétraméthoxysilane, le tétraéthoxysilane, le méthyltriméthoxysilane, le méthyltriéthoxysilane, le diméthyldiméthoxysilane, le diméthyldiéthoxysilane, l'isooctyltriméthoxysilane, l'isooctyltriéthoxysilane, le (cyclohexyl)méthyldiméthoxysilane, le dicyclopentyldiméthoxysilane, le phényltriéthoxysilane, le (3-aminopropyl)triéthoxysilane, le (3-aminopropyl)triméthoxysilane, le N-(2-aminoéthyl)(3-aminopropyl)triéthoxysilane, le N-(2-aminoéthyl)(3-aminopropyl)triméthoxysilane, le N-(2-aminoéthyl)(3-aminopropyl)méthyldiméthoxysilane, l'anhydride de l'acide 3-(triéthoxysilyl)propylsuccinique, le N-cyclohexylaminométhylméthyldiéthoxysilane, le N-(3-(triéthoxysilyl)propyl)-méthyluréthane, le N-(3-(triméthoxysilyl)propyl)-méthyluréthane, la N-(3-(triéthoxysilyl)propyl)-urée, la N-(3-(triméthoxysilyl)propyl)-urée, le (3-glycidoxypropyl)-triéthoxysilane ou le (3-glycidoxypropyl)triméthoxysilane.

5. Procédé pour la préparation de particules composites selon les revendications 1 à 4, **caractérisé en ce qu'**on utilise en plus un ou plusieurs composés du silicium éthyléniquement insaturés de formule (2) R⁷SiR⁸₀₋₂(OR⁹)₁₋₃, où R⁷ signifie CH₂=CR¹⁰-(CH₂)₀₋₁ ou CH₂=CR¹⁰CO₂ (CH₂)₁₋₃, R⁸ signifie un radical C₁-C₃-alkyle, un radical C₁-C₃-alcoxy ou halogène, R⁹ signifie un radical alkyle non ramifié ou ramifié, le cas échéant substitué, comprenant 1 à 12 atomes de carbone ou un radical acyle comprenant 2 à 12 atomes de carbone, où R⁹ peut le cas échéant être interrompu par un groupe éther et R¹⁰ représente H ou CH₃.

6. Procédé pour la préparation de particules composites selon les revendications 1 à 5, **caractérisé en ce qu'**on utilise comme solvant l'eau, un solvant organique, un solvant organique en combinaison avec de l'eau, un mélange de solvants constitué par plusieurs solvants organiques ou un mélange de solvants constitué par plusieurs solvants organiques en combinaison avec de l'eau.

7. Procédé pour la préparation de particules composites selon les revendications 1 à 6, **caractérisé en ce qu'**on utilise en plus des poly(alcools vinyliques) modifiés par silane, pouvant être obtenus par traitement de polymères d'alcool vinylique avec un ou plusieurs composés du silicium éthyléniquement insaturés de formule (2) R⁷SiR⁸₀₋₂(OR⁹)₁₋₃, où R⁷ signifie CH₂=CR¹⁰-(CH₂)₀₋₁ ou CH₂=CR¹⁰CO₂(CH₂)₁₋₃, R⁸ signifie un radical C₁-C₃-alkyle, un radical C₁-C₃-alcoxy ou halogène, R⁹ signifie un radical alkyle non ramifié ou ramifié, le cas échéant substitué, comprenant 1 à 12 atomes de carbone ou un radical acyle comprenant 2 à 12 atomes de carbone, où R⁹ peut le cas échéant être interrompu par un groupe éther et R¹⁰ représente H ou CH₃,
à température augmentée.

8. Particules composites pouvant être obtenues par condensation de
α) un ou plusieurs composés du silicium de formule générale
(RO)ₙSiR¹₄₋ₙ (1),
où
R signifie un radical alkyle, aryle ou alcoxyalkyle le cas échéant substitué comprenant 1 à 20 atomes de carbone ou un atome d'hydrogène,
R¹ signifie un radical hydrocarboné, comprenant 1 à 12 atomes de carbone, le cas échéant substitué, ou un atome d'hydrogène, et
n vaut 2 à 4, ou
β) un ou plusieurs produits de condensation des composés du silicium de formule générale (1)
dans un solvant ou un mélange de plusieurs solvants, en présence d'un ou de plusieurs polymères solubles, en utilisant comme polymères solubles des polymères d'esters de vinyle comprenant 6 à 15% en poids d'acides carboxyliques éthyléniquement insaturés et le cas échéant 0,3 à 2% en poids de silanes éthyléniquement insaturés ; des polymères d'esters de vinyle comprenant 0,3 à 2% en poids de silanes éthyléniquement insaturés ; des polymères d'esters de l'acide (méth)acrylique comprenant 6 à 15% en poids d'acides carboxyliques éthyléniquement insaturés et le cas échéant 0,3 à 2% en poids de silanes éthyléniquement insaturés ; ou des polymères d'esters de l'acide (méth)acrylique comprenant 0,3 à 2% en poids de silanes éthyléniquement insaturés, la somme des indications en % en poids valant à chaque fois 100% en poids,
les polymères solubles étant solubles dans le solvant susmentionné ou dans le mélange susmentionné de plusieurs solvants à une température quelconque dans la plage de températures de 1 à 100°C et à un pH quelconque entre 2 et 12 à raison d'au moins 1 g par litre de solvant ou de mélange de solvants, et
des produits de condensation ainsi formés des composés de silicium α) ou des produits de condensation β) ou leurs produits de condensation étant fixés sur un ou plusieurs polymères solubles.

9. Utilisation des particules composites selon la revendication 8 comme liant, co-liant ou additif pour des laques en poudre, des agents de revêtement, des adhésifs ou dans des formulations pour des matériaux synthétiques ou des composites.

10. Utilisation des particules composites selon la revendication 8 pour le traitement de surface de matériaux synthétiques ou naturels, tels que la pierre, le bois, le cuir, le papier, les textiles ou les matériaux synthétiques.

11. Utilisation des particules composites selon la revendication 8 lors de la fabrication de tapis ou de moquettes.

12. Utilisation des particules composites selon la revendication 8 lors de la fabrication de couches formant une barrière.
